# EUROPEAN PATENT APPLICATION

(11) **EP 1 997 679 A1**
(43) Date of publication of application: **03.12.2008**
(21) Application number: 08386006.4
(22) Date of filing: 15.04.2008
(51) Int. Cl.: B60P 3/14

(54) **Mobile project machinery and truck maintenance and fuel feed facility**

(30) Priority: 29.05.2007 GR 20070100324
(71) Applicant: Michaniki Kritis Ltd., 73100 Chania, Crete (GR)
(72) Inventor: Mavrommatis, Ioannis, 73100 Chania, Crete (GR)

(57) **Abstract**

The mobile project machinery and truck maintenance and fuel feed facility consists of components as illustrated in figure 1 that can support maintenance and feed with fuel through the fuel tank (1), lubricants via the two automatic grease injectors (2), air through the compressed air supply air compressor (3), water from the water tank (6), tools from the toolbox (7) and parts from the parts and consumable items box (8). Mounted on a trailer, the portable facility offers the advantage of being transportable to the workplace (work site) by any vehicle with a towing attachment; when attached to a 4x4 vehicle, it can be transported to inaccessible areas.

## Description

This invention concerns a mobile support unit on a trailer vehicle, destined for the needs of project machinery, trucks and other vehicles, designed to meet their requirements in supplying the work station with fuel, lubricant, compressed air, water and tools.

Current support units are exclusively motor vehicles with adjusted high-capacity tanks and lubricants in barrels; this makes their access to inaccessible site areas impossible. Further, the cost for their purchase and use is very high.

This mobile support unit is mounted on a trailer vehicle, loaded with a light, small and thus flexible superstructure and can be towed by any vehicle (such as a tractor, 4X4 for rural use etc.). As it has small-capacity tanks, the cost for fuel is low, yet the unit is able to provide full support.

Mobile maintenance and fuel feed facility includes:
1. Fuel (oil) tank of one to three compartments, 300 to 999 It capacity, including a fuel consumption meter, ventilation, fill and discharge valves, and a manhole, as well as a hose with a feed nozzle and a wheel-type mounting arrangement.
2. Two automatic grease injectors.
3. One air compressor for the supply of compressed air, with a gasometer of up to 200 litres, engine 5.5 to 6.5 hp including a starting motor, 250 bar head and dynamo. The dynamo provides the battery continuous current to drive the oil pump and the meter.
4. Two to four wheels with hoses for compressed air, water and lubricant.
5. Two portable fire-extinguishers.
6. A water tank with a pressure pump.
7. One toolbox.
8. One box of parts and consumables.

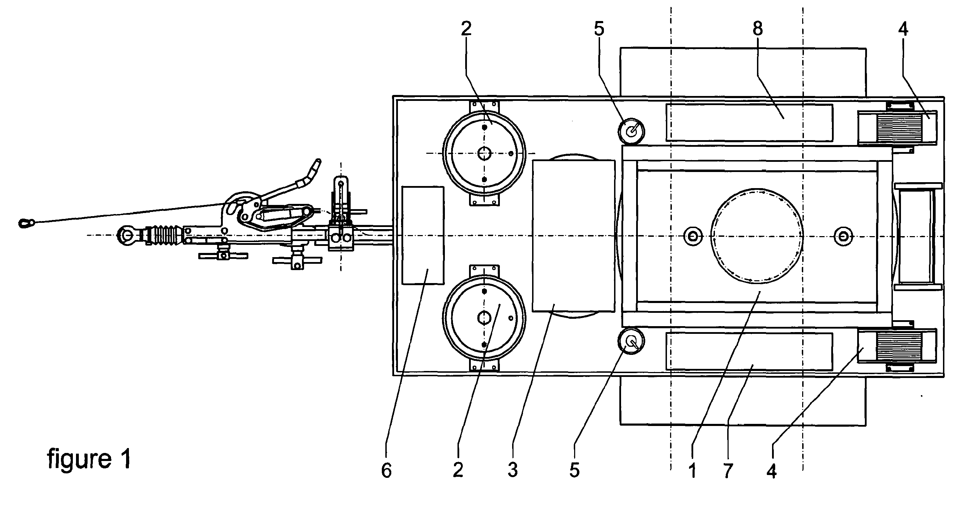

Figure 1 shows the facility's ground plan and illustrates the 300-999 It fuel tank with fuel consumption meter, fill, ventilation and discharge valves, manhole and hose with a feed nozzle and wheel-type mounting arrangement (1), the automatic grease injectors (2), the air compressor for the supply of compressed air with a gasometer of up to 200 litres, engine 5.5 to 6.5 hp including a starting motor, 250 bar head and dynamo (3), the wheel with a hose (4), the portable fire-extinguisher (5), the water tank with a pressure pump (6), the toolbox (7) and the box of parts and consumables (8).

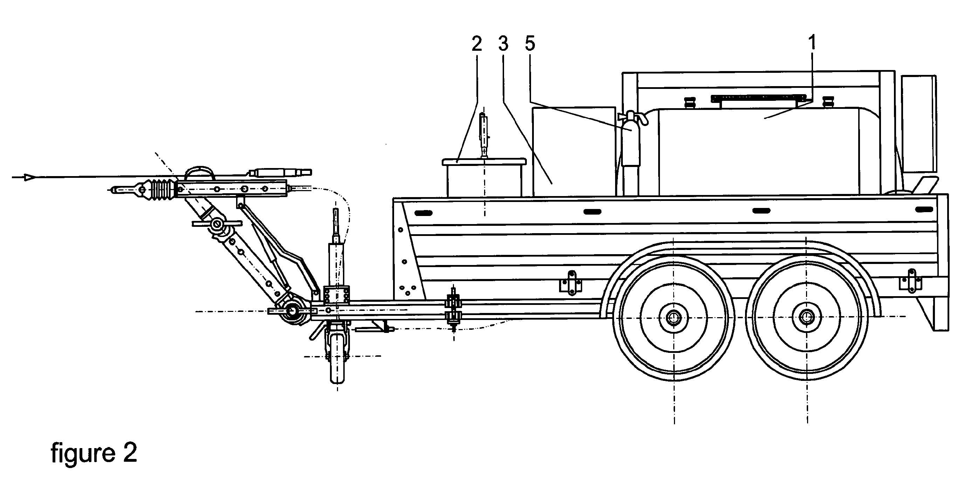

Figure 2 shows a side view of the facility and illustrates the 300-999 lt fuel tank with fuel consumption meter, fill, ventilation and discharge valves, manhole and hose with a feed nozzle and wheel-type mounting arrangement (1), the automatic grease injector (2), the air compressor for the supply of compressed air with a gasometer of up to 200 litres, engine 5.5 to 6.5 hp including a starting motor, 250 bar head and dynamo (3) and the portable fire-extinguisher (5).

## Claims

1. The mobile project machinery and truck maintenance and fuel feed facility is mounted on a trailer and consists of a fuel (oil) tank of one to three compartments, of a capacity of 300 to 999 liters, including a fuel consumption meter, ventilation, fill and discharge valves, and a manhole, as well as a hose with a feed nozzle and a wheel-type mounting arrangement (1), two automatic grease injectors (2), one air compressor for the supply of compressed air, with a gasometer of up to 200 litres, engine 5.5 to 6.5 hp including a starting motor, 250 bar head and a dynamo; the dynamo provides the battery continuous current that in turn drives the oil pump and the meter (3), two to four wheels with hoses for compressed air, water and lubricant (4), two portable fire-extinguishers (5), a water tank with a pressure pump (6), a toolbox (7) and a box of parts and consumables (8).
